# EUROPEAN PATENT SPECIFICATION

(11) **EP 2 683 048 B1**
(45) Date of publication and mention of the grant of the patent: **18.05.2016**
(21) Application number: 12752520.2
(22) Date of filing: 02.03.2012
(51) Int. Cl.: H01M 10/44, H02J 7/00, H02J 3/32

(54) **CHARGING POWER CONTROL SYSTEM**
LADESTROMSTEUERUNGSSYSTEM
SYSTÈME DE RÉGULATION DU COURANT DE CHARGE

(30) Priority: 03.03.2011 JP 2011046862
(43) Date of publication of application: 08.01.2014
(73) Proprietor: NEC Corporation, Tokyo 108-8001 (JP)
(72) Inventor: NYU, Takayuki, Tokyo 108-8001 (JP)
(74) Representative: Betten & Resch
(86) International application number: PCT/JP2012/055396
(87) International publication number: WO 2012/118184

(56) References cited:
- JP-A- 2007 535 282
- JP-A- 2009 159 734
- JP-A- 2009 159 734
- JP-A- 2010 187 451
- US-A1- 2004 130 292
- US-A1- 2010 141 205

## Description

### BACKGROUND

The present invention relates to a charged power control system for a secondary battery mounted on a motor vehicle.

As a motor vehicle mounted with a secondary battery, there are, for example, an electric automobile and a hybrid vehicle mounted with both of an internal combustion engine and a motor. In order to drive such a motor vehicle with electricity, it is necessary to charge the mounted secondary battery from an external charger. The capacity of the secondary battery mounted on the motor vehicle varies according to a use of the vehicle. However, the capacity of a secondary battery of the electric vehicle positioned as replacing means for the conventional automobile mounted with the internal combustion engine tends to be large. The secondary battery has a capacity of, for example, several ten kWh. When such a large-capacity secondary battery is charged, large electric power is consumed if it is attempted to complete the charging in a short time. On the other hand, electric power continues to be consumed for a long time if the secondary battery is charged with reduced consumed power.

As an example of the conventional charging control, Patent Document 1 discloses a method of providing a single charging controller with real-time information concerning a power load other than a charger in a house, predicting power load fluctuation, calculating, from maximum contract power and a power load prediction value, electric power that can be used for charging, and performing charging control such that charged electric power does not to exceed the calculated electric power.

Patent Document 2 discloses a charging device that simultaneously charges a plurality of secondary batteries in parallel. The disclosed device includes a plurality of direct-current stabilizing power supply circuits and a switching unit. The device determines a combination of the direct-current stabilizing power supply circuits on the basis of information from the secondary batteries and switches a switch of the switching unit to control charged power to the plurality of secondary batteries.

Patent Document 3 discloses a charging system that simultaneously charges batteries of a plurality of battery-driven vehicles. The system includes one or more DC-DC power converters, one or more charging ports of which can be connected to the batteries. The DC-DC power converters are selectively connected to a plurality of charging ports to selectively supply a higher port power level. The DC-DC power converters are connected to an AC rectifier through a DC bus. The AC rectifier is connected to an AC power supply having a limited power rating. The AC charging system controls the operation of the DC-DC power converters such that total power absorption in the AC rectifier does not exceed the power rating.

Patent Document 1: Japanese Patent Application Laid-Open No. 2008-136291
Patent Document 2: Japanese Patent Application Laid-Open No. 2008-199752
Patent Document 3: Japanese Translation of PCT Application No. 2007-535282

Patent Document 1 is based on the premise that a setting place of the charger is a house. One charger is assumed. However, it is also possible that a plurality of chargers are placed in a place where a large number of people can use the chargers such as a gas station. Power control for the plurality of chargers cannot be handled simply by providing the chargers with information concerning power loads other than the chargers.

Patent Document 2 is based on the premise that maximum allowable consumed power of a charger is fixed. The maximum allowable consumed power is distributed to the plurality of secondary batteries. However, this method has a problem explained below. The charger is set in a store such as a gas station. However, since electric power used in the store is used by electrical installations such as lights and air conditioners other than the charger as well, the maximum allowable consumed power that can be allocated to the charger fluctuates at every moment. Therefore, when the maximum allowable consumed power of the charger is fixed without taking into account consumed power of the other electrical installations and the switching by the switching unit is simply performed, it could occur that electric power exceeds the contract power and the supply of the electric power is interrupted or an excess rate is charged. Further, various users use the charger. A charger installation contractor desires to set a service level corresponding to characteristics of a user. However, fine control cannot be performed simply by using the information from the secondary batteries as described in Patent Document 2.

In Patent Document 3, the operation of the DC-DC power converters is controlled such that the total power absorption in the AC rectifier does not exceed the power rating. However, conversion efficiency of electric power is not taken into account at this point. In general, conversion efficiency of AC/DC and DC/DC is set to maximize efficiency during a rated output. Therefore, it is desirable to determine allocated electric power to maximize the conversion efficiency. However, the conversion efficiency is not taken into account in Patent Document 3.

US 2004/130292 A1 discloses a charging system for simultaneously charging the batteries of a plurality of battery powered vehicles. The charging includes one or more DC-DC power converters having one or more charging ports configured to plug into the batteries. The DC-DC power converters are each configured to selectively connect to more than one charging port to selectively provide for higher port power levels. The DC-DC power converters connect to an AC rectifier through a DC bus. The AC rectifier connects to an AC power source having a limited power rating. The AC charging system also has a controller that controls the operation of the DC-DC power converters such that the total power draw on the AC rectifier does not exceed the power rating.; The system is further configured such that the DC-DC power converters can drain selected batteries to obtain power for charging other batteries, thus allowing for batteries to be cycled.

JP 2009 159734 A discloses a DC power distribution system capable of improving the conversion efficiency in converting AC power into DC power. The DC power distribution system includes a power converter for converting the AC power of an AC power source AC into DC power to be supplied to a power distribution passage connected to a load, and an auxiliary power supply device connected to the power distribution passage. The auxiliary power supply device includes a secondary battery, a charge device for outputting a charged current to the secondary battery on the basis of the power obtained from the power distribution passage, a discharge device for supplying the power stored in the secondary battery to the power distribution passage, a power detection device for detecting the DC power amount supplied from the power converter, and a control unit for controlling the charge device and the discharge device based on the detected result of the power detection device. The control unit adjusts the magnitude of the charged current output by the charge device so that the DC power amount detected by the power detecting device becomes a value improving the conversion efficiency in the power converter.

### SUMMARY

Therefore, it is an exemplary object of the present invention to efficiently perform, in an environment in which a plurality of chargers operate simultaneously with electrical installations other than the chargers, charging by the plurality of chargers within a range of remaining allowable power excluding used power of the other electrical installations.

The present invention is defined in the independent claim 1. The dependent claims define embodiments of the present invention.

A charged power control system includes: a plurality of chargers; a switchboard configured to receive electric power from a power network and supply the electric power to the plurality of chargers and electrical installations other than the chargers; a first power measuring unit configured to measure consumed power of the electrical installations other than the chargers; a second power measuring unit configured to measure consumed power of the respective chargers; an AC/DC conversion unit configured to convert the electric power supplied from the switchboard from an alternating current into a direct current and supply the resulting electric power to the chargers; and a power control unit configured to determine allocated power to the charger on the basis of the consumed power of the other chargers and the electrical installations other than the chargers and conversion efficiency of the AC/DC conversion unit. The charger includes a charger control unit configured to receive a notification of the allocated power and determine, within a range not exceeding the allocated power, a charging current supplied to a secondary battery connected thereto.

According to the present invention, it is possible to efficiently perform, in an environment in which a plurality of chargers operate simultaneously with electrical installations other than the chargers, charging by the plurality of chargers within a range of remaining allowable power excluding used power of the other electrical installations.

### DESCRIPTION OF DRAWINGS

Fig. 1 is a block diagram showing the configuration of a charged power control system according to a first embodiment of the present invention.
Fig. 2 is a sequence chart showing the operation of the charged power control system according to the first embodiment of the present invention.
Fig. 3 is a flowchart of the operation of a power control unit of a server according to the first embodiment of the present invention.
Fig. 4 is a diagram showing changes in consumed power of chargers according to the first embodiment of the present invention.
Fig. 5 is a diagram showing an example of recorded contents of a power management table according to the first embodiment of the present invention.
Fig. 6 is a block diagram showing the configuration of a charger according to a fourth embodiment of the present invention.

### EXEMPLARY EMBODIMENT

### First Embodiment

Next, modes for carrying out the present invention are explained in detail with reference to the drawings.

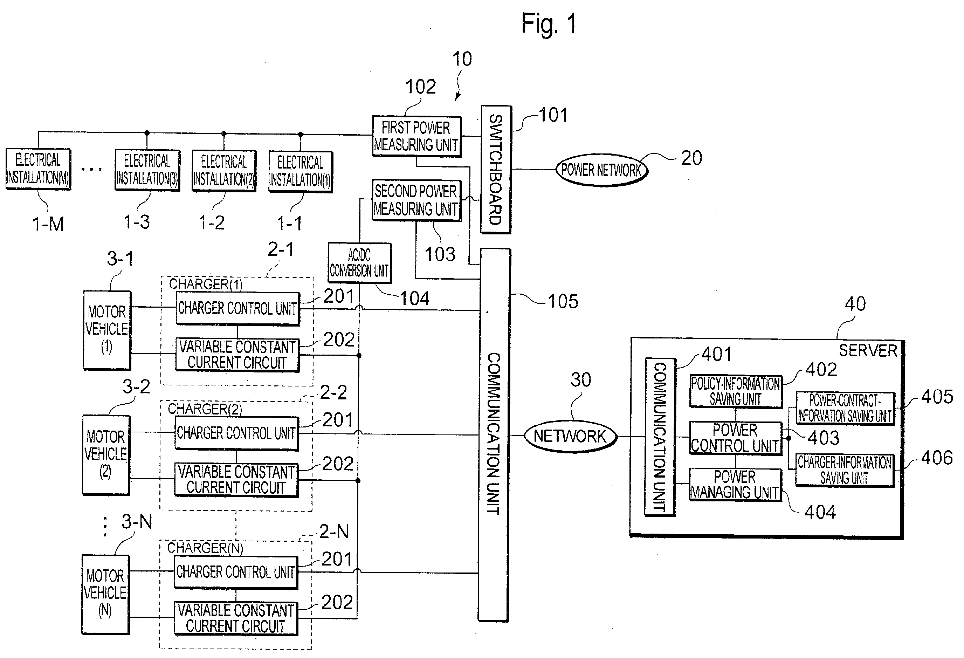

Fig. 1 is a block diagram showing the configuration of a charged power control system 10 according to a first embodiment of the present invention. As shown in the figure, the charged power control system 10 includes a switchboard 101, a first power measuring unit 102, a second power measuring unit 103, an AC/DC conversion unit 104, a communication unit 105, chargers 2-1, 2-2, ..., and 2-N (N is a natural number), and a server 40.

The switchboard 101 receives electric power from a power network 20 and supplies the electric power to the chargers 2-1, 2-2, ..., and 2-N and electrical installations 1-1, 1-2, 1-3, ..., and 1-M (M is a natural number) other than the chargers.

The first power measuring unit 102 measures consumed power of the electrical installations 1-1, 1-2, 1-3, ..., and 1-M other than the chargers. The second power measuring unit 103 measures consumed power of the chargers.

The AC/DC conversion unit 104 converts the electric power supplied from the switchboard 101 from an alternating current into a direct current. The communication unit 105 notifies the server 40 of information from the first power measuring unit 102 and the second power measuring unit 103 via a network 30 and notifies the chargers 2-1, 2-2, ..., and 2-N of control information from the server 40 via the network 30.

The chargers 2-1, 2-2, ..., and 2-N receive direct-current power supplied from the AC/DC conversion unit 104 and supply predetermined power to motor vehicles 3-1, 3-2, ..., and 3-N.

The chargers 2-1, 2-2, ..., and 2-N include variable constant current circuits 202 configured to output a designated current value to the motor vehicles 3-1, 3-2, ..., and 3-N without depending on a load and charger control units 201 configured to determine a charging current between the charger control unit 201 and the motor vehicles 3-1, 3-2, ..., and 3-N on the basis of the control information from the server 40 and notify the variable constant current circuits 202 of a determined current value.

The server 40 calculates control information to be set in the chargers from information of the first power measuring unit 102 and the second power measuring unit 103 and information on the inside of the server 40.

The server 40 includes a communication unit 401 configured to communicate with the charger side, a policy-information saving unit 402 configured to save policy information concerning power control, a power control unit 403 configured to calculate, on the basis of consumed power prediction, power contract information, and the policy information, electric power allocated to the chargers and notify the charges of the information, a power managing unit 404 configured to perform consumed power prediction and the like on the basis of power information notified from the first power measuring unit 102 and the second power measuring unit 103, and a power-contract-information saving unit 405 configured to manage contract power for each setting place, and a charger-information saving unit 406 configured to manage information concerning the respective chargers.

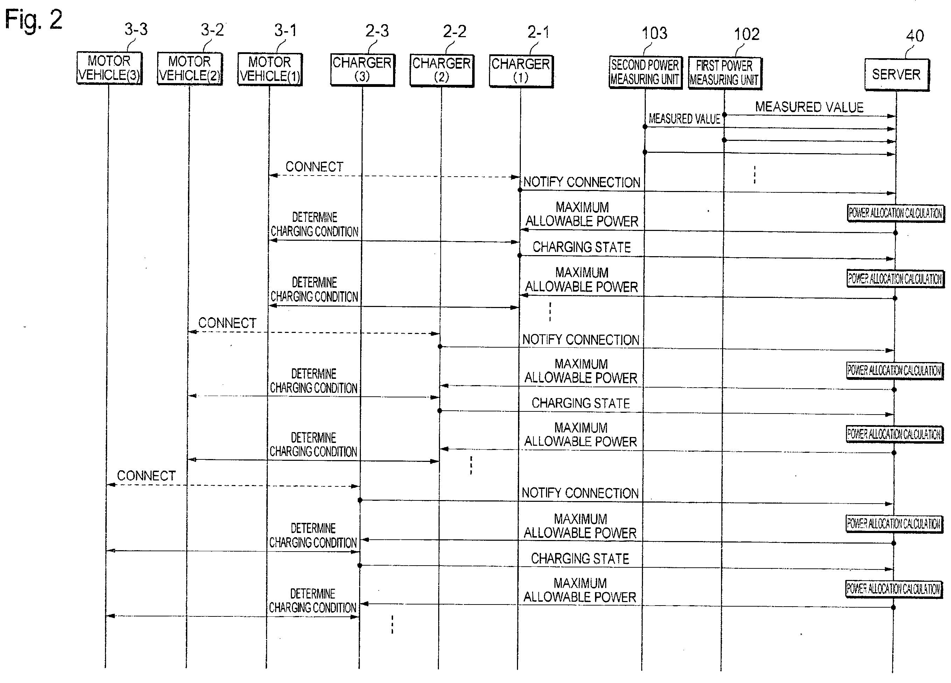

Next, the operation of the charged power control system 10 is explained in detail using Figs. 2 to 4.

Fig. 2 is a processing sequence in the case in which three chargers 2-1 to 2-3 are present under the same power contract.

The first power measuring unit 102 measures electric power consumed by the electrical installations other than the chargers 2-1 to 2-3 and periodically notifies the server 40 of a measured value. The second power measuring unit 103 measures electric power consumed by the chargers and periodically notifies the server 40 of a measured value.

For example, when the motor vehicle 3-1 is connected to the charger 2-1, a connection notification indicating that the motor vehicle is connected to the charger 2-1 is transmitted from the charger 2-1 to the server 40. The server 40 performs a power allocation calculation taking into account information concerning maximum contract power, present consumed power and a past history of the electrical installations, and a power allocation state to the other chargers. The server 40 notifies the charger 2-1 of a calculated allocated power value.

The charger 2-1 retains the allocated power value notified from the server 40 as a maximum allowable power value. Further, the charger 2-1 notifies the motor vehicle 3-1 of ability information such as the maximum allowable power value and an output voltage range and an output current range of the charger 2-1 and determines a charging condition between the charger 2-1 and the motor vehicle 3-1.

When the charging condition is determined, charging processing is started between the motor vehicle 3-1 and the charger 2-1. The charger 2-1 periodically notifies the server 40 of a charging state. Upon receiving the charging state, the server 40 performs the power allocation calculation again when consumed power of the charger 2-1 tends to decrease. The server 40 notifies the charger 2-1 of a calculated maximum allowable power value. When the maximum allowable power value is updated, the charger 2-1 determines a charging condition again between the charger 2-1 and the motor vehicle 3-1 and continues the charging processing.

Thereafter, the same processing is executed when the motor vehicle 3-2 is connected to the charger 2-2 and when the motor vehicle 3-3 is connected to the charger 2-3.

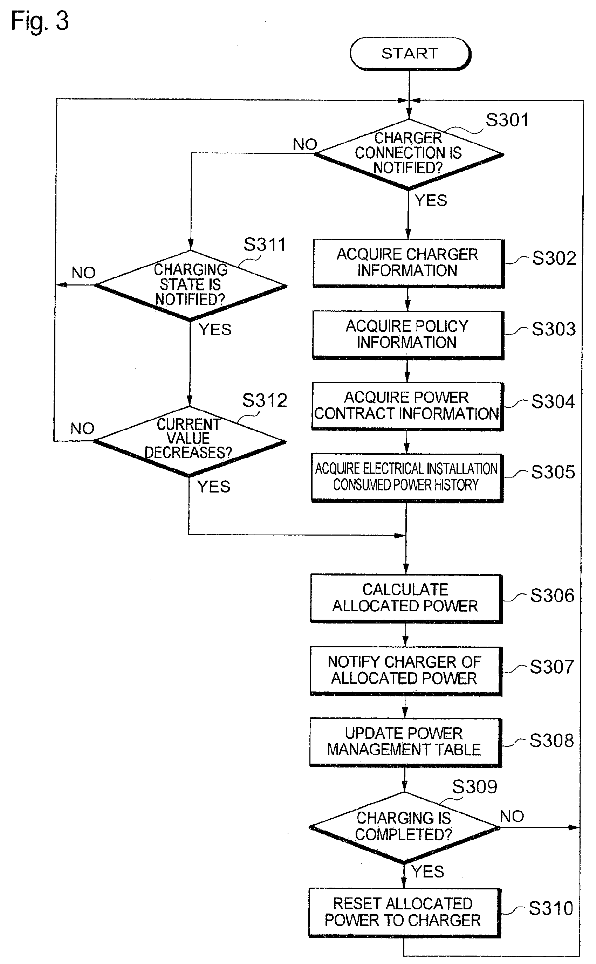

Fig. 3 is a flowchart of the operation of the power control unit 403 of the server 40. The power control unit 403 monitors presence or absence of a connection notification of a charger and a motor vehicle, presence or absence of a charging state notification, presence or absence of a decrease in a current value in the notified charging state information, charging completion, and the like and switches the operation according to a situation.

Upon receiving a connection notification of a charger (S301: YES), the power control unit 403 acquires information concerning the charger from the charger-information saving unit 406 (S302) and acquires, from the policy-information saving unit 402, policy information set by an operator operating the charger (S303). Subsequently, the power control unit 403 acquires, from the power-contract-information saving unit 405, power contract information of a place where the charger is set (S304). Further, the power control unit 403 acquires an electrical installation consumed power history from the power managing unit 404 (S305).

Thereafter, the power control unit 403 calculates allocated power on the basis of the acquired information (S306) and notifies the charger of the calculated allocated power (S307). The power control unit 403 updates a power management table in which a power allocation state in the server 40 is managed (S308). When the charging processing continues (S309: NO), the power control unit 403 returns to S301 and waits for the next charging state notification. When the charging processing is completed (S309: YES), the power control unit 403 resets the allocated power to the charger (S310) and returns to S301.

During standby in S301, upon receiving a charging state notification from a charger (S311: YES), the power control unit 403 proceeds to S312. When a current value of the charger decreases (YES) in S312, the power control unit 403 proceeds to S306. On the other hand, when the current value does not decrease (NO), the power control unit 403 returns to S301.

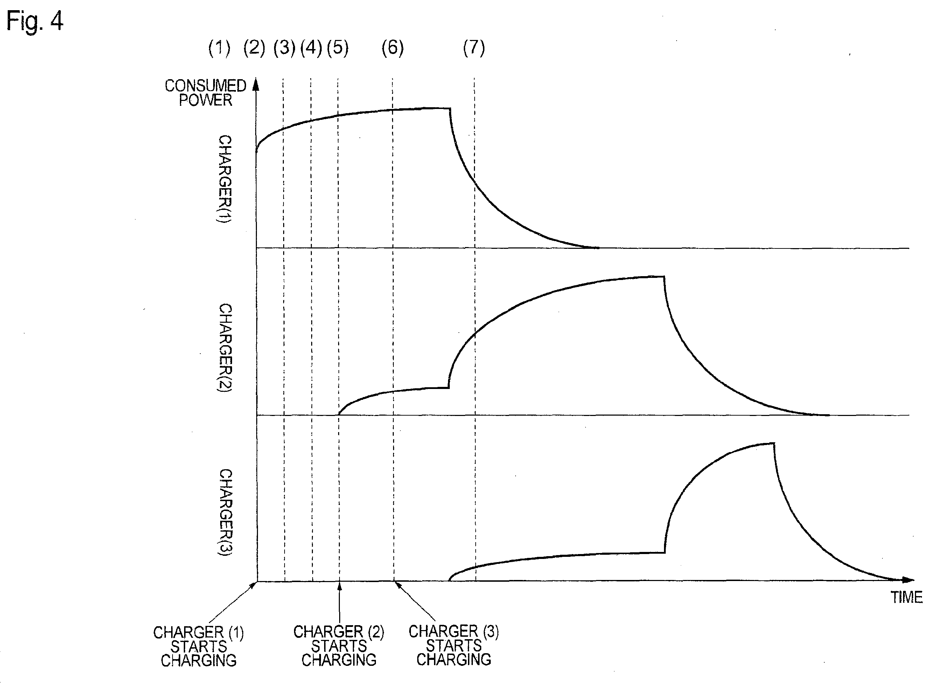

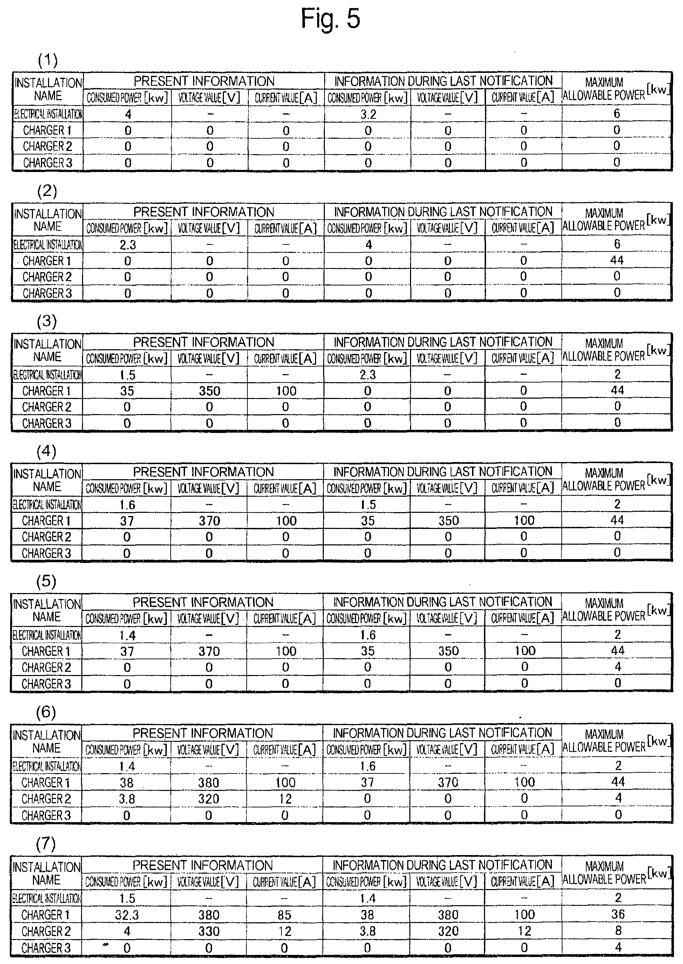

The operation is explained more in detail using Figs. 4 and 5. In this embodiment, it is assumed that, as policy information, a policy for sequentially allocating surplus power to chargers in order of connection of motor vehicles to the chargers is set. Maximum contract power is assumed to be 50 kw. Fig. 4 shows changes in consumed power of chargers in the case in which charging is sequentially started in three chargers. Fig. 5 shows an example of recorded contents of the power management table at respective points of (1) to (7) shown in Fig. 4.

A state in (1) of Fig. 4 is a situation in which no charger is used and electric power is consumed by only electrical installations other than the chargers. As shown in (1) of Fig. 5, consumed power of the electrical installations at this time is 4 kw. From a past history, maximum allowable power of the electrical installations is 6 kw.

A state in (2) of Fig. 4 is a state in which a motor vehicle 1 is connected to a charger 1. As shown in (2) of Fig. 5, consumed power of the electrical installations at this time is 2.3 kw. Maximum allowable power of the electrical installations is 6 kw. Since the motor vehicle 1 is connected to the charger 1, the server 40 calculates power allocation to the charger 1, notifies the charger 1 of the power allocation, and updates the power management table. As shown in (2) of Fig. 5, maximum allowable power of the charger 1 is 44 kw. According to the policy, the server 40 allocates, to the charger 1, 44 kw obtained by subtracting the maximum allowable power 6 kw of the electrical installations from the maximum contract power 50 kw.

A state in (3) of Fig. 4 is a state in which the server 40 receives a charging state from the charger 1. As shown in (3) of Fig. 5, the consumed power of the electrical installations and the consumed power of the charger 1 are updated at this time. The consumed power of the charger 1 recorded in the power management table is a measured value in an interface portion with the motor vehicle. Actually, a value obtained by taking into account conversion efficiency of the variable constant current circuit 202 and the AC/DC conversion unit 104 is consumed power in the proximity of the switchboard 101. Since time elapses between the state (2) and the state (3), a value of the maximum allowable power of the electrical installations also changes to 2 kw. The conversion efficiency of the AC/DC conversion unit 104 and the variable constant current circuit 202 is designed such that efficiency is maximized during a rated output. For example, the rated output is set to 50 kW. When an output is 50 kW, the conversion efficiency is 90%. When an output is 20 kW, the conversion efficiency drops to 80%.

When calculating allocated power, the power control unit 403 determines the allocated power taking into account the conversion efficiency of the AC/DC conversion unit 104 and the variable constant current circuit 202. For example, maximum allowable power allocated to the charger 1 is set to prevent the conversion efficiency of the AC/DC conversion unit 104 and the variable constant current circuit 202 from dropping to a predetermined threshold or less.

A state in (4) of Fig. 4 is a state in which the server 40 receives a charging state from the charger 1. As shown in (4) of Fig. 5, the consumed power of the electrical installations and the consumed power of the charger 1 are updated. Since a charging current value of the charger 1 does not decrease, the maximum allowable power allocated to the charger 1 is not changed.

A state in (5) of Fig. 4 is a state in which a motor vehicle 2 is connected to a charger 2. As shown in (5) of Fig. 5, surplus power of 4 kw is allocated to the charger 2 as maximum allowable power.

A state in (6) of Fig. 4 is a state in which the charger 1 and the charger 2 are simultaneously performing charging and a state in which a charger 3 is connected. The server 40 receives charging state notifications from the chargers. Information concerning the charging state notifications is reflected on the power management table. Since charging current values of both the charger 1 and the charger 2 do not decrease, the maximum allowable powers allocated to the charger 1 and the charger 2 do not change. Therefore, there is no surplus power. Power allocation to the charger 3 is zero.

A state in (7) of Fig. 4 is a state in which, for example, when a rechargeable battery of a motor vehicle is a lithium ion battery, the rechargeable battery enters a constant voltage charging region of constant current-constant voltage charging. Since the consumed power of the charger 1 starts to decrease, surplus power is generated in the maximum allowable power allocated to the charger 1. The generated surplus power is allocated to the charger 2 and the charger 3. Since the consumed power of the charger 1 decreases from 38 kw to 32.3 kw, consumed power in the proximity of the switchboard 101 is about 36 kw (=32.3/0.9). Therefore, the maximum allowable power of the charger 1 is set to 36 kw. Surplus power of 8 kw is equally distributed to the charger 2 and the charger 3 to set the maximum allowable powers of the charger 2 and the charger 3 respectively to 8 kw and 4 kw.

As explained above, according to this embodiment, it is possible to flexibly change the allocate power to the plurality of chargers according to a change in the consumed power of the electrical installations other than the chargers and the consumed power of the chargers. It is possible to perform efficient operation within a range in which electric power does not exceed the maximum contract power.

### Second Embodiment

In the first embodiment, as the policy information, the policy for sequentially allocating surplus power to the chargers in order of connection of the motor vehicles to the chargers is set. In the following explanation in a second embodiment, a policy for allocating non-zero maximum allowable power to all chargers in advance is assumed.

For example, maximum allowable power of 5 kw is allocated to the chargers in advance. In the first embodiment, since surplus power is zero when the motor vehicle is connected to the charger 3, electric power is not allocated to the charger 3. However, by allocating a part of contract power to the respective chargers in advance, it is possible to prevent a state in which, even if a motor vehicle is connected to a charger, the motor vehicle is not charged and a user waits.

### Third Embodiment

In the first embodiment, the policy for equally distributing, when surplus power is generated, the surplus power to the plurality of chargers is used. In a third embodiment, a distribution ratio of surplus power is changed according to user attributes.

For example, when a user of the charger 2 is a member of a charging service and a user of the charger 3 is a non-member of the charging service, a policy for distributing surplus power to the member and the non-member at a ratio of 2:1 is assumed.

That is, in the first embodiment, in the state in (7) of Fig. 5, a decrease of the consumed power of the charger 1 is equally distributed to each of the chargers 2 and 3 by 4 kw. In the third embodiment, 5.3 kw is allocated to the charger 2 and 2.7 kw is allocated to the charger 3.

In this way, according to the present invention, it is possible to distribute electric power according to attributes of users. Therefore, it is possible to provide various charging service menus.

### Fourth Embodiment

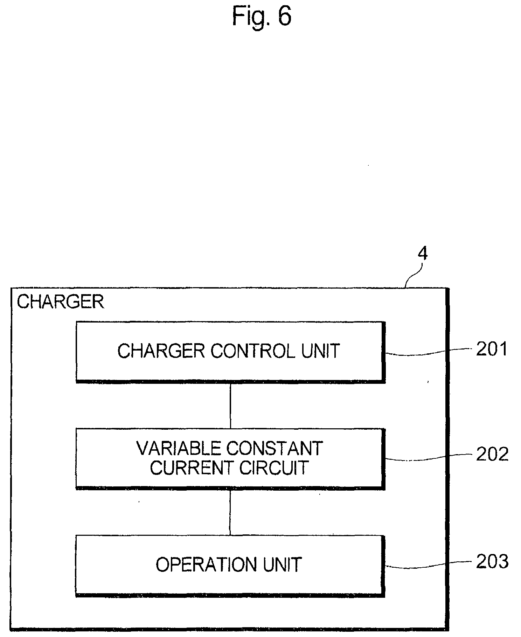

Fig. 6 is a block diagram showing the configuration of a charger 4 of a charged power control system according to a fourth embodiment. As shown in Fig. 6, in the fourth embodiment, the charger 4 includes the charger control unit 201, the variable constant current circuit 202, and an operation unit 203. The operations of the charger control unit 201 and the variable constant current circuit 202 are the same as those in the first to third embodiments.

The operation unit 203 has a function for a user of the charger 4 to select whether the user uses a service other than charging when determining a charging current between the charger 4 and a motor vehicle. A selection result is notified to the power control unit 403 of the server 40 via the network 30. Examples of the service other than charging include a car washing service. When the user selects the car washing service, the power control unit 403 allocates electric power to the charger 4 more than usual.

This application claims priority based on Japanese Patent Application No. 2011-46862 filed on March 3, 2011, the entire disclosure of which is incorporated herein.

The present invention is explained above with reference to the embodiments. However, the present invention is not limited to the embodiments. Various changes understandable by those skilled in the art can be made in the configurations and the details of the present invention within the scope of the present invention.

A part or all of the embodiments can be described as indicated by the following notes but are not limited to the below description.

(Note 1) A charged power control system including:
a plurality of chargers;
a switchboard configured to receive electric power from a power network and supply the electric power to the plurality of chargers and electrical installations other than the chargers;
a first power measuring unit configured to measure consumed power of the electrical installations other than the chargers;
a second power measuring unit configured to measure consumed power of the respective chargers;
an AC/DC conversion unit configured to convert the electric power supplied from the switchboard from an alternating current into a direct current and supply the resulting electric power to the chargers; and
a power control unit configured to determine allocated power to the charger on the basis of the consumed power of the other chargers and the electrical installations other than the chargers and conversion efficiency of the AC/DC conversion unit, wherein
the charger includes a charger control unit configured to receive a notification of the allocated power and determine, within a range not exceeding the allocated power, a charging current supplied to a secondary battery connected thereto.

(Note 2) The charged power control system described in note 1, wherein the power control unit determines the allocated power according to a policy set in advance.

(Note 3) The charged power control system described in note 2, wherein the policy is such that, when surplus power is generated, the surplus power is equally distributed to all the chargers to which secondary batteries are connected.

(Note 4) The charged power control system described in note 2, wherein the policy is such that non-zero electric power is allocated, as an initial value, to all the chargers to which secondary batteries are connected.

(Note 5) The charged power control system described in note 2, wherein the policy is such that, when surplus power is generated, the surplus power is distributed to the charger according to a characteristic of a charging service user connecting a secondary battery thereto.

(Note 6) The charged power control system described in note 5, wherein the characteristic of the charging service user is at least one from among whether member or not, male or female, member grade, and whether selecting also a service other than the charging service.

(Note 7) The charged power control system described in any one of notes 2 to 6, wherein the power control unit performs redistribution of the electric power to the respective chargers triggered by a charging state notification periodically made by the chargers or a measurement result notification of the consumed power of the electrical installations other than the chargers measured by the first power measuring unit.

The present invention is suitable for efficiently performing, in an environment in which a plurality of chargers operate simultaneously with electrical installations other than the chargers, charging by the plurality of chargers within a range of remaining allowable power excluding used power of the other electrical installations.

- 1-1, 1-2, 1-3, ..., 1-M: Electrical installations
- 2-1, 2-2, ..., 2-N, 4: Chargers
- 3-1, 3-2, ..., 3-N: Motor vehicles
- 10: Charged power control system
- 20: Power network
- 30: Network
- 40: Server
- 101: Switchboard
- 102: First power measuring unit
- 103: Second power measuring unit
- 104: AC/DC conversion unit
- 105: Communication unit
- 201: Charger control unit
- 202: Variable constant current circuit
- 203: Operation unit
- 401: Communication unit
- 402: Policy-information saving unit
- 403: Power control unit
- 404: Power managing unit
- 405: Power-contract-information-saving unit
- 406: Charger-information saving unit

## Claims

1. A charged power control system (10) comprising:
a plurality of chargers (2-1, 2-2, ..., 2-N);
a switchboard (101) configured to receive electric power from a power network (20) and supply the electric power to the plurality of chargers (2-1, 2-2, ..., 2-N) and electrical installations (1-1, 1-2, 1-3, ..., 1-M) other than the chargers (2-1, 2-2, ..., 2-N);
a first power measuring unit (102) configured to measure consumed power of the electrical installations (1-1, 1-2, 1-3, ..., 1-M) other than the chargers (2-1, 2-2, ..., 2-N);
a second power measuring unit (103) configured to measure consumed power of the respective chargers (2-1, 2-2, ..., 2-N);
an AC/DC conversion unit (104) configured to convert the electric power supplied from the switchboard (101) from an alternating current into a direct current and supply the resulting electric power to the chargers (2-1, 2-2, ..., 2-N); and
a power control unit (403) configured to determine allocated power to the charger (2-1, 2-2, ..., 2-N), wherein
the charger (2-1, 2-2, ..., 2-N) includes a charger control unit (201) configured to receive a notification of the allocated power and determine, within a range not exceeding the allocated power, a charging current supplied to a secondary battery connected thereto; and
a variable constant current circuit (202) configured to output the determined charging current to the secondary battery,
wherein the power control unit (403) is configured to determine allocated power to the charger (2-1, 2-2, ..., 2-N) on the basis of the consumed power of the other chargers, the consumed power of the electrical installations (1-1, 1-2, 1-3, ..., 1-M) other than the chargers (2-1, 2-2, ..., 2-N), conversion efficiency of the AC/DC conversion unit (104), and conversion efficiency of the variable constant current circuit (202).

2. The charged power control system (10) according to claim 1, wherein the power control unit (403) determines the allocated power according to a policy set in advance.

3. The charged power control system (10) according to claim 2, wherein the policy is such that, when surplus power is generated, the surplus power is equally distributed to all the chargers (2-1, 2-2, ..., 2-N) to which secondary batteries are connected.

4. The charged power control system (10) according to claim 2, wherein the policy is such that non-zero electric power is allocated, as an initial value, to all the chargers (2-1, 2-2, ..., 2-N) to which secondary batteries are connected.

5. The charged power control system (10) according to claim 2, wherein the policy is such that, when surplus power is generated, the surplus power is distributed to the charger (2-1, 2-2, ..., 2-N) according to a characteristic of a charging service user connecting a secondary battery thereto.

6. The charged power control system (10) according to claim 5, wherein the characteristic of the charging service user is at least one from among whether member or not, male or female, member grade, and whether selecting also a service other than the charging service.

7. The charged power control system (10) according to any one of claims 2 to 6, wherein the power control unit (403) performs redistribution of the electric power to the respective chargers (2-1, 2-2, ..., 2-N) triggered by a charging state notification periodically made by the chargers (2-1, 2-2, ..., 2-N) or a measurement result notification of the consumed power of the electrical installations (1-1, 1-2, 1-3, ..., 1-M) other than the chargers (2-1, 2-2, ..., 2-N) measured by the first power measuring unit (102).

## Patentansprüche

1. Geladenes Energiesteuersystem (10), umfassend:
eine Mehrzahl von Ladeeinrichtungen (2-1, 2-2, ..., 2-N);
ein Schaltbrett (101), welches dazu eingerichtet ist, elektrische Energie von einem Stromnetz (20) zu empfangen und die elektrische Energie an die Mehrzahl von Ladeeinrichtungen (2-1, 2-2, ..., 2-N) und elektrische Installationen (1-1, 1-2, 1-3, ..., 1-M), die von den Ladeeinrichtungen (2-1, 2-2, ..., 2-N) verschieden sind, zuzuführen;
eine erste Energiemesseinheit (102), welche dazu eingerichtet ist, verbrauchte Energie der elektrischen Installationen (1-1, 1-2, 1-3, ..., 1-M), die von den Ladeeinrichtungen (2-1, 2-2, ..., 2-N) verschieden sind, zu messen;
eine zweite Energiemesseinheit (103), welche dazu eingerichtet ist, verbrauchte Energie der jeweiligen Ladeeinrichtung (2-1, 2-2, ..., 2-N) zu messen;
eine AC/DC-Umwandlungseinheit (104), welche dazu eingerichtet ist, die von dem Schaltbrett (101) zugeführte elektrische Energie von einem Wechselstrom in einen Gleichstrom umzuwandeln und die resultierende elektrische Energie an die Ladeeinrichtungen (2-1, 2-2, ..., 2-N) zuzuführen; und
eine Energiesteuereinheit (403), welche dazu eingerichtet ist, bereitgestellte Energie an die Ladeeinrichtung (2-1, 2-2, ..., 2-N) zu bestimmen, wobei
die Ladeeinrichtung (2-1, 2-2, ..., 2-N) eine Ladeeinrichtungssteuereinheit (201), welche dazu eingerichtet ist, eine Benachrichtigung der bereitgestellten Energie zu empfangen und innerhalb eines Bereichs, welcher die bereitgestellte Energie nicht übersteigt, einen an eine damit verbundene sekundäre Batterie zugeführten Ladestrom zu bestimmen; und
eine variable Konstantstromschaltung (202) enthält, welche dazu eingerichtet ist, den bestimmten Ladestrom an die sekundäre Batterie auszugeben,
wobei die Energiesteuereinheit (403) dazu eingerichtet ist, bereitgestellte Energie an die Ladeeinrichtung (2-1, 2-2, ..., 2-N) auf der Basis der verbrauchten Energie der anderen Ladeeinrichtungen, der verbrauchten Energie der elektrischen Installationen (1-1, 1-2, 1-3, ... 1-M), die von den Ladeeinrichtungen (2-1, 2-2, ..., 2-N) verschieden sind, Umwandlungseffizienz der AC/DC-Umwandlungseinheit (104) und Umwandlungseffizienz der variablen Konstantstromschaltung (202) zu bestimmen.

2. Geladenes Energiesteuersystem (10) nach Anspruch 1, wobei die Energiesteuereinheit (403) die bereitgestellte Energie in Übereinstimmung mit einer im Vorhinein eingestellten Richtlinie bestimmt.

3. Geladenes Energiesteuersystem (10) nach Anspruch 2, wobei die Richtlinie derart ist, dass, wenn Überschussenergie erzeugt wird, die Überschussenergie gleichmäßig an alle Ladeeinrichtungen (2-1, 2-2, ..., 2-N), mit welchen sekundäre Batterien verbunden sind, verteilt wird.

4. Geladenes Energiesteuersystem (10) nach Anspruch 2, wobei die Richtlinie derart ist, dass elektrische Energie, die nicht Null ist, als ein anfänglicher Wert an alle Ladeeinrichtungen (2-1, 2-2, ..., 2-N), mit welchen sekundäre Batterien verbunden sind, bereitgestellt wird.

5. Geladenes Energiesteuersystem (10) nach Anspruch 2, wobei die Richtlinie derart ist, dass, wenn Überschussenergie erzeugt wird, die Überschussenergie an die Ladeeinrichtung (2-1, 2-2, ..., 2-N) in Übereinstimmung mit einer Charakteristik eines Ladedienstnutzers, welcher eine sekundäre Batterie damit verbindet, verteilt wird.

6. Geladenes Energiesteuersystem (10) nach Anspruch 5, wobei die Charakteristik des Ladedienstnutzers ist, ob Mitglied oder nicht, Mann oder Frau, Mitgliedsgrad und/oder ob ebenfalls ein Dienst ausgewählt wird, der von dem Ladedienst verschieden ist.

7. Geladenes Energiesteuersystem (10) nach einem der Ansprüche 2 bis 6, wobei die Energiesteuereinheit (403) eine Umverteilung der elektrischen Energie, die durch eine durch die Ladeeinrichtungen (2-1, 2-2, ..., 2-N) periodisch vorgenommene Ladezustandsbenachrichtigung oder eine Messergebnisbenachrichtigung der durch die erste Energiemesseinheit (102) gemessenen verbrauchten Energie der elektrischen Installationen (1-1, 1-2, 1-3, ..., 1-M), die von den Ladeeinrichtungen (2-1, 2-2, ..., 2-N) verschieden sind, an die jeweiligen Ladeeinrichtungen (2-1, 2-2, ..., 2-N) vornimmt.

## Revendications

1. Système de commande (10) de courant de charge comprenant :
une pluralité de chargeurs (2-1, 2-2, ..., 2-N) ;
un tableau de distribution (101) configuré pour recevoir la puissance électrique provenant d'un réseau d'alimentation (20) et pour fournir la puissance électrique à la pluralité de chargeurs (2-1, 2-2, ..., 2-N) et à des installations électriques (1-1, 1-2, 1-3, ..., 1-M) autres que les chargeurs (2-1, 2-2, ..., 2-N) ;
une première unité de mesure de puissance (102) configurée pour mesurer la puissance consommée des installations électriques (1-1, 1-2, 1-3, ..., 1-M) autres que les chargeurs (2-1, 2-2, ..., 2-N) ;
une deuxième unité de mesure de puissance (103) configurée pour mesurer la puissance consommée des chargeurs (2-1, 2-2, ..., 2-N) respectifs ;
une unité de conversion CA/CC (104) configurée pour convertir la puissance électrique fournie depuis le tableau de distribution (101) d'un courant alternatif en un courant continu et pour fournir la puissance électrique résultante aux chargeurs (2-1, 2-2, ..., 2-N) ; et
une unité de commande de puissance (403) configurée pour déterminer la puissance allouée au chargeur (2-1, 2-2, ..., 2-N), dans laquelle
le chargeur (2-1, 2-2, ..., 2-N) inclut une unité de commande (201) de chargeur configurée pour recevoir une notification de la puissance allouée et pour déterminer, dans une plage ne dépassant pas la puissance allouée, un courant de charge fourni à une batterie secondaire connectée à celui-ci ; et
un circuit à courant constant variable (202) configuré pour délivrer le courant de charge déterminé à la batterie secondaire,
dans lequel l'unité de commande de puissance (403) est configurée pour déterminer la puissance allouée au chargeur (2-1, 2-2, ..., 2-N) sur la base de la puissance consommée des autres chargeurs, de la puissance consommée des installations électriques (1-1, 1-2, 1-3, ..., 1-M) autres que les chargeurs (2-1, 2-2, ..., 2-N), de l'efficacité de conversion de l'unité de conversion CA/CC (104) et de l'efficacité de conversion du circuit à courant constant variable (202).

2. Système de commande (10) de courant de charge selon la revendication 1, dans lequel l'unité de commande de puissance (403) détermine la puissance allouée en fonction d'une politique établie à l'avance.

3. Système de commande (10) de courant de charge selon la revendication 2, dans lequel la politique est telle que, quand un surplus de puissance est généré, le surplus de puissance est distribué de manière égale à tous les chargeurs (2-1, 2-2, ..., 2-N) auxquels des batteries secondaires sont connectées.

4. Système de commande (10) de courant de charge selon la revendication 2, dans lequel la politique est telle qu'une puissance électrique non nulle est allouée, comme valeur initiale, à tous les chargeurs (2-1, 2-2, ..., 2-N) auxquels des batteries secondaires sont connectées.

5. Système de commande (10) de courant de charge selon la revendication 2, dans lequel la politique est telle que, quand un surplus de puissance est généré, le surplus de puissance est distribué aux chargeurs (2-1, 2-2, ..., 2-N) en fonction d'une caractéristique d'un utilisateur de service de charge connectant une batterie secondaire à ceux-ci.

6. Système de commande (10) de courant de charge selon la revendication 5, dans lequel la caractéristique de l'utilisateur de service de charge est au moins l'une parmi : s'il s'agit d'un membre ou non, mâle ou femelle, la classe de membre, et s'il sélectionne également un service autre que le service de charge.

7. Système de commande (10) de courant de charge selon l'une quelconque des revendications 2 à 6, dans lequel l'unité de commande de puissance (403) effectue la redistribution de la puissance électrique aux chargeurs (2-1, 2-2, ..., 2-N) respectifs déclenchés par une notification d'état de charge périodiquement effectuée par les chargeurs (2-1, 2-2, ..., 2-N) ou une notification de résultat de mesure de la puissance consommée des installations électriques (1-1, 1-2, 1-3, ..., 1-M) autres que les chargeurs (2-1, 2-2, ..., 2-N) mesurée par la première unité de mesure de puissance (102).
